# FASCICULE DE BREVET EUROPEEN

(11) **EP 3 574 451 B1**
(45) Date de publication et mention de la délivrance du brevet: **03.03.2021**
(21) Numéro de dépôt: 18703074.7
(22) Date de dépôt: 24.01.2018
(51) Int. Cl.: G06K 19/077

(54) **DISPOSITIF RFID ET PROCÉDÉ DE FABRICATION**
RFID-VORRICHTUNG UND VERFAHREN ZUR HERSTELLUNG DAVON
RFID DEVICE AND METHOD FOR MANUFACTURING SAME

(30) Priorité: 27.01.2017 FR 1750679
(43) Date de publication de la demande: 04.12.2019
(73) Titulaire: IDEMIA France, 92700 Colombes (FR)
(72) Inventeur: ALI, Ahmed, 92700 Colombes (FR)
(74) Mandataire: Cabinet Beau de Loménie
(86) Numéro de dépôt international: PCT/FR2018/050161
(87) Numéro de publication internationale: WO 2018/138432

(56) Documents cités:
- EP-A1- 1 369 816
- WO-A1-94/18700
- WO-A2-02/13135
- WO-A2-2004/019261

## Description

### Arrière-plan de l'invention

L'invention se rapporte au domaine des dispositifs RFID (pour « radio frequency identification » en anglais) et concerne plus particulièrement une carte RFID configurée pour fonctionner en mode sans contact.

De façon connue, un dispositif RFID (ou « RFID tag » en anglais) est destiné à communiquer par radiofréquence (RF) avec un lecteur RFID, par exemple à une fréquence de 13,56MHz. Les dispositifs RFID sont aujourd'hui largement utilisés dans divers domaines d'applications, notamment pour l'identification des personnes, le paiement sans contact, le contrôle d'objets connectés...

Des avancées technologiques permettent aujourd'hui d'intégrer un tel dispositif RFID dans une carte présentant par exemple le format d'une carte bancaire (format ID-1 selon la norme ISO 7810). L'inclusion d'un dispositif RFID dans une telle carte facilite notamment la prise en main pour l'utilisateur. On peut ainsi présenter une carte RFID face à un lecteur RFID pour payer un titre de transport ou s'identifier auprès d'un service donné, par exemple.

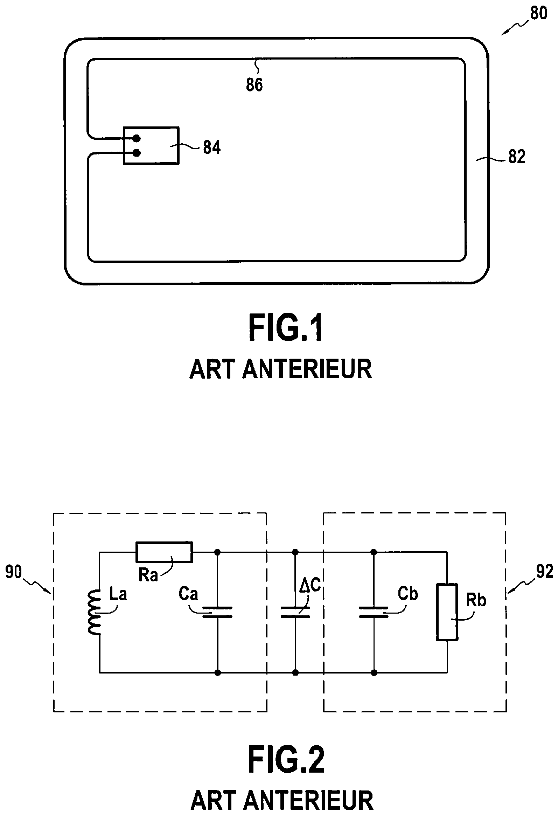

La **figure 1** représente schématiquement la structure d'une carte RFID 80 conventionnelle. Dans cet exemple, la carte RFID 80 comprend un corps de carte 82 dans lequel sont disposés un microcontrôleur (ou transpondeur) RF 84 et une antenne RF 86. Le microcontrôleur RF 84, se présentant sous la forme d'une puce électronique, est configuré pour coopérer en mode sans contact selon la norme ISO 14443 avec un lecteur externe, au moyen de l'antenne RF 86 à laquelle le microcontrôleur RF 84 est connecté électriquement. L'antenne RF 86 peut comporter une ou plusieurs spires s'étendant dans le corps de carte 82.

De façon bien connue, le microcontrôleur RF 84 fonctionne en mode sans contact en utilisant l'énergie collectée par l'antenne RF 86 à partir de signaux RF provenant d'un lecteur sans contact.

Pour les cartes RFID de grand format, tel que de format ID-1 selon la norme ISO 7810 par exemple, l'antenne RF 86 peut être réalisée selon une technique de fabrication filaire bien connue consistant à former l'antenne RF 86 sous la forme d'un fil conducteur qui est intégré au corps de carte 82 pour réaliser au moins une spire. La technique de formation filaire est aujourd'hui bien maîtrisée et permet de contrôler précisément la fréquence de travail de l'antenne RF 84 en ajustant le nombre de spires, le diamètre du fil de l'antenne, ou encore l'espacement entre chaque spire.

Grâce aux progrès en termes de miniaturisation, il est aujourd'hui possible de fabriquer des cartes RFID de format inférieur au format ID-1 selon la norme ISO 7810. Cependant, certaines contraintes techniques, et notamment l'espace réduit disponibles dans les cartes RFID de petite taille, imposent de monter une capacité supplémentaire en parallèle du microcontrôleur RF 84 afin d'atteindre les spécifications souhaitées.

La **figure 2** représente le schéma électrique d'une carte RFID de petite taille (inférieur à ID-1) dans laquelle a été incorporée une capacité supplémentaire en parallèle comme indiqué ci-dessus. Plus précisément, un microcontrôleur RF 92 est connecté via deux bornes électriques aux extrémités d'une antenne RF 90. Le microcontrôleur RF 92 équivaut ici électriquement à une capacité Cb montée en parallèle avec une résistance Rb tandis que l'antenne RF 90 équivaut ici électriquement à un ensemble comprenant une résistance Ra en série avec une inductance La, cet ensemble étant monté en parallèle avec une capacité Ca.

Comme illustré en **figure 2****,** une capacité supplémentaire ΔC est montée en parallèle aux bornes du microcontrôleur RF 92 afin de pouvoir ajuster la fréquence de travail de l'antenne RF 90, notamment lorsque le nombre de spires est limité.

Cependant, l'ajout de cette capacité ΔC pose des problèmes en termes de fabrication. En pratique, cette capacité ΔC est un composant discret monté en surface sur le substrat de la carte. Or, la présence d'un tel composant n'est pas adaptée à la mise en œuvre de la technique de fabrication filaire pour réaliser l'antenne RF 90. La formation d'une antenne RF filaire impose en particulier l'utilisation d'une technique de soudure par arc électrique qui est incompatible avec un composant discret monté en surface tel que la capacité ΔC.

Aussi, pour des tailles de format inférieures à ID-1 selon la norme ISO 7810, on fabrique aujourd'hui l'antenne RF selon une autre technique de fabrication, en l'occurrence par gravure sur un circuit imprimé, dit PCB pour « Printed Circuit Board ».

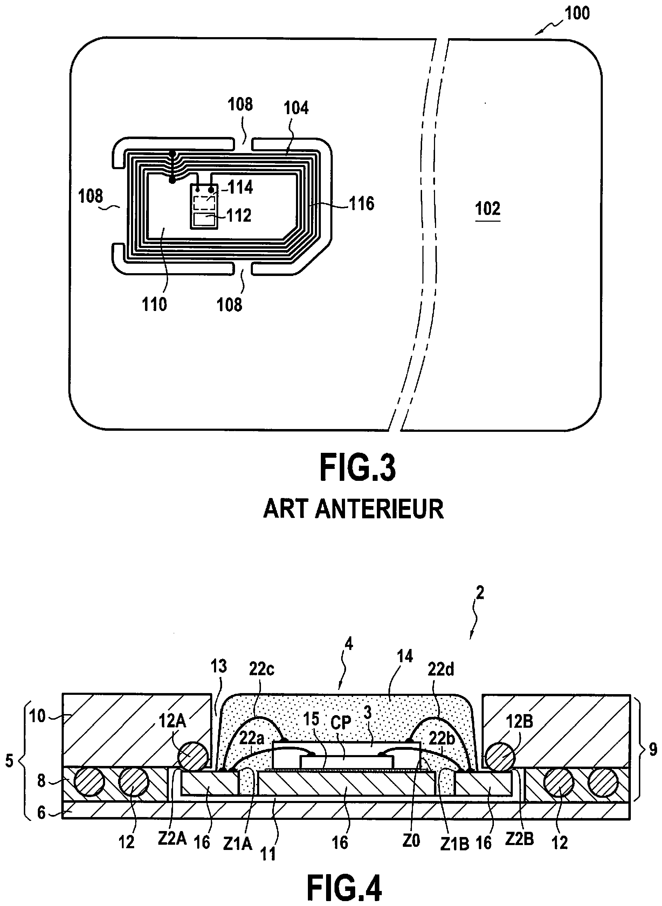

La **figure 3** représente schématiquement la structure d'une carte RFID 100 conforme au schéma électrique représenté en **figure 2****.** La carte RFID 100 est de taille inférieure à ID-1 selon la norme ISO 7810. Dans cet exemple, le corps de carte 102 de la carte RFID 100 comporte un élément détachable 104 fixé au reste du corps 102 au moyen de liaisons mécaniques 108 qu'un utilisateur peut rompre manuellement.

L'élément détachable 104 comprend, sur un PCB 110, une antenne RF 116 connectée électriquement en parallèle à un microcontrôleur RF 112 et à une capacité 114, cette dernière étant un composant discret monté en surface sur le PCB 110. La formation de l'antenne RF 116 par gravure sur le PCB permet ne pas endommager la capacité 114 dans la mesure où la technique de soudure par arc électrique n'est pas utilisée dans ce cas (usage d'une pâte conductrice à base Ag par exemple).

La fabrication d'une antenne RF par gravure sur un PCB présente cependant des inconvénients majeurs. En particulier, la réalisation d'un PCB est généralement complexe et engendre un coût de fabrication élevé. En outre, il n'est pas possible de laminer un PCB avec des couches de PVC comme cela peut être fait pour des cartes de format ID-1, ce qui empêche de personnaliser l'aspect esthétique de la carte de façon satisfaisante.

Il existe aujourd'hui un besoin pour palier notamment aux inconvénients et insuffisances exposés ci-avant.

Le document WO 02/13135 A2 datant du 14 février 2002 divulgue la structure d'un module RFID utilisant un circuit intégré à 3 terminaux et deux capacités, mais ne nécessitant que deux connexions externes.

Le document WO 2004/019261 A2 datant du 4 mars 2004 divulgue une carte SIM comprenant un substrat, une puce montée sur le substrat pour communiquer en contact et en non contact, et des contacts externes.

Le document EP 1369816 A1 datant du 10 décembre 2003 porte sur l'usage de capacités d'ajustement dans un module de circuit intégré dans une carte à puce sans contact.

### Objet et résumé de l'invention

L'invention est définie dans le jeu de revendications ci-joint.

A cet effet, la présente invention concerne un dispositif RFID selon la revendication 1.

L'invention permet avantageusement de réaliser une carte RFID de petite taille avec une antenne RF de type filaire. Autrement dit, malgré la petite taille de la carte RFID imposant la présence d'au moins une capacité pour ajuster la fréquence de résonance de l'antenne RF, il est possible d'utiliser la technique de fabrication filaire pour former l'antenne RF. De cette manière, il n'est pas nécessaire d'utiliser un PCB pour former le substrat de la carte RFID, ce qui permet de limiter la complexité de construction de la carte RFID ainsi que les coûts de fabrication. En outre, il est ainsi possible de personnaliser l'aspect esthétique de la carte RFID avec si besoin au moins une couche de protection laminée sur une face de la carte RFID.

Selon un mode de réalisation particulier, le substrat est en plastique (en PVC par exemple ou équivalent). Selon un exemple particulier, le substrat n'est pas (ou ne comporte pas) de PCB.

Selon un mode de réalisation particulier, ladite au moins une capacité est de type Si.

Selon un mode de réalisation particulier, au moins une couche de protection supérieure et au moins une couche de protection inférieure sont laminées de part et d'autre du substrat. Une couche de protection supérieure et/ou inférieure est par exemple laminée sur le substrat de sorte à recouvrir le module électronique.

Selon un mode de réalisation particulier, l'antenne RF est intégrée dans le substrat par application d'ultrasons (et éventuellement aussi d'une pression).

Selon un mode de réalisation particulier, l'antenne RF présente un format conforme à la classe 5 ou à la classe 6 selon la norme ISO 14443.

L'invention concerne également un procédé de fabrication d'un dispositif RFID selon la revendication 7.

Selon un exemple particulier, lors de l'étape de formation, l'antenne RF est intégrée dans le substrat par application d'ultrasons (et éventuellement aussi par application d'une pression).

Selon un exemple particulier, lors de l'étape de formation, l'antenne RF est bobinée selon un gabarit mécanique puis intégrée dans le substrat par application d'une matière adhésive.

Selon un mode de réalisation particulier, l'étape de fourniture du module électronique comprend les étapes suivantes :
- fixation de la puce RF et de ladite au moins une capacité sur la première portion de la grille de connexion du module électronique ;
- connexion de la puce RF et de ladite au moins une capacité, via des fils de câblage, à deux zones de connexion internes de la deuxième portion de la grille de connexion ; et
- formation du boîtier du module électronique à partir d'une résine d'encapsulation de sorte que ladite résine encapsule les fils de câblage, les zones de connexion internes de la grille de connexion étant situées dans le boîtier et isolées électriquement de la première portion de la grille de connexion.

Selon un mode de réalisation particulier, l'antenne RF est comprise dans une couche du substrat, l'étape de formation de l'antenne RF comprenant le positionnement de ladite couche sur le substrat sur lequel est monté le module électronique de sorte que les extrémités de l'antenne RF soient chacune située en regard d'une zone de connexion externe respective du module électronique.

Selon un mode de réalisation particulier, au moins une couche de protection supérieure et au moins une couche de protection inférieure sont laminées de part et d'autre du substrat.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 déjà décrite représente schématiquement une carte RFID conventionnelle selon un premier exemple ;
- la figure 2 représente le schéma électrique d'une carte RFID selon un deuxième exemple ;
- la figure 3 représente schématiquement une carte RFID conventionnelle selon un autre exemple ;
- la figure 4 est une vue en coupe représentant schématiquement une carte RFID selon un mode de réalisation particulier de l'invention ;
- la figure 5 représente schématiquement la structure d'un module électronique selon un mode de réalisation particulier de l'invention ;
- la figure 6 représente schématiquement la structure d'une carte RFID selon un mode de réalisation particulier de l'invention ;
- la figure 7 représente schématiquement le schéma électrique d'une carte RFID selon un mode de réalisation particulier de l'invention ;
- la figure 8 représente, sous forme d'un ordinogramme, les étapes d'un procédé de fabrication d'une carte RDIF selon un mode de réalisation particulier de l'invention ; et
- la figure 9 représente, sous forme d'un ordinogramme, les étapes d'un procédé de fabrication d'une carte RFID selon une variante de réalisation.

### Description détaillée de plusieurs modes de réalisation

Comme indiqué ci-avant, l'invention concerne les dispositifs RFID et plus particulièrement les cartes RFID configurées pour fonctionner en mode sans contact.

Dans ce document, les termes « carte RFID » ou « dispositif RFID» désignent respectivement une carte ou un dispositif conforme à la norme ISO 14443 (par exemple la version ISO/CEI 1444-1 : 2016). Bien que les exemples de réalisation de l'invention décrits ci-après portent sur une carte RFID, d'autres types de dispositifs RFID sont toutefois possibles dans le cadre de l'invention.

Comme indiqué ci-avant, l'usage d'un PCB pour réaliser une carte RFID présentent des inconvénients majeurs. Pour pallier notamment ces inconvénients, l'invention propose, selon divers modes de réalisation, une carte RFID comprenant un substrat dans (ou sur) lequel sont ménagés une antenne RF de type filaire et un module électronique. Ce module électronique comprend une puce radiofréquence (RF) (et plus particulièrement un microcontrôleur RF), au moins une capacité sous forme d'un composant discret extérieur à la puce RF ; et un boîtier dans lequel sont encapsulées la puce RF et ladite au moins une capacité. La puce RF et ladite au moins une capacité sont chacune connectées électriquement en parallèle à deux extrémités de l'antenne RF de sorte que le module électronique puisse communiquer en mode sans contact avec l'extérieur de la carte en utilisant ladite antenne RF. L'invention trouve une application particulière, mais non limitative, dans le cas où la carte RFID présente une taille inférieure au format ID-1 selon la norme ISO 7810. La surface de la carte RFID est inférieure ou égale à ¼ de la surface du format ID-1 selon la norme ISO 7810, comme décrit plus en détail ultérieurement.

La présente invention vise également un procédé de fabrication d'un tel dispositif RFID.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

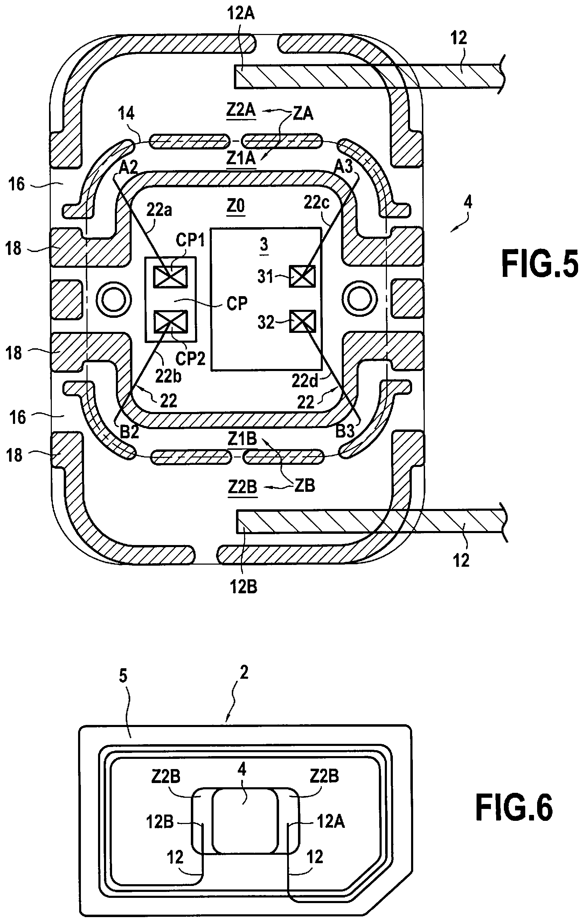

Une carte RFID 2 est à présent décrite en référence aux **figures 4** et **5****,** selon un mode de réalisation particulier de l'invention. La **figure 4** représente en vue de coupe la carte RFID 2 comprenant un substrat 5, une antenne RF 12 de type filaire disposée dans le substrat 5, et un module électronique 4 (ou module RF) disposé dans le substrat 5, l'antenne RF 12 étant externe au module électronique 4. La **figure 5** représente plus particulièrement la structure du module électronique 4 selon un exemple particulier. Comme indiqué par la suite, de nombreux éléments ne sont décrits qu'à titre d'exemple.

Comme indiqué par la suite, l'antenne filaire RF 12 peut être fabriquée directement dans le substrat 5 ou, alternativement peut être formée (ou bobinée) séparément puis assemblée au substrat 5.

La carte RFID 2 présente une taille inférieure au format ID-1 selon la norme ISO 7810, tel que par exemple le format ID-000 (désigné parfois sous l'appellation « format SIM ») selon la norme ISO 7810. La carte RFID 2 présente une surface (dans le plan dans lequel elle s'étend) inférieure ou égale à ¼ de la surface du format ID-1 selon la norme ISO 7810. A noter que, selon la norme ISO 7810, le format ID-1 présente une longueur L = 85,6 ± 0,12 mm, une largeur l = 53,97 ± 0,05 mm, la surface du format ID-1 étant donc approximativement de 46,2 cm². La surface du format ID-000 est approximativement de 3,75 cm² (pour des dimensions de 25 mm x 15 mm environ).

Plus précisément, comme illustré en **figure 4****,** le substrat 5 comprend des couches 6, 8 et 10. La couche intermédiaire 8 et la couche supérieure 10 forment ensemble une couche 9 positionnée sur la couche inférieure 6. La formation du substrat en 3 sous-couches 6, 8 et 10 ne constitue toutefois qu'un exemple de réalisation, d'autres mises en œuvre étant possibles selon lesquelles un nombre quelconque de couches (au moins une) forment le substrat 5.

Les couches 6, 8 et 10 sont par exemple en plastique (PVC, PETG ou autre) ou tout autre matériau approprié.

Le substrat 5 présente par exemple une épaisseur de l'ordre de 400 µm, cette épaisseur pouvant varier en fonction notamment de l'épaisseur du module électronique 4 et des épaisseurs de la capacité CP et du microcontrôleur RF 3.

Dans l'exemple considéré ici, le substrat 5 n'est pas un PCB (circuit imprimé). Sa réalisation est donc simple et peu coûteuse.

Dans cet exemple, le module électronique 4 est positionné sur la première couche 6 du substrat 5. Par ailleurs, l'antenne RF 12, qui présente ici une pluralité de spires, est formée dans la couche 9.

En outre, deux extrémités notées 12A et 12B de l'antenne 12 sont respectivement positionnées sur, et connectées à, des zones de connexion Z2A et Z2B, dites zones de connexion externes, du module électronique 4. L'antenne RF 12 s'étend ici exclusivement à l'extérieur du boîtier 12. En particulier, les extrémités 12A et 12B d'antenne sont situées hors du boîtier 14 ce qui permet de protéger les composants internes du module électronique 4, lors notamment du montage de l'antenne RF filaire comme expliqué ultérieurement. Dans cet exemple, ces extrémités d'antenne 12A, 12B sont comprises dans la couche supérieure 10 du substrat 5, bien que d'autres arrangements soient possibles.

La connexion électrique des extrémités d'antenne 12A et 12B sur les zones de connexion externes correspondantes Z2A et Z2B est réalisé par exemple par soudure (par exemple par arc électrique). Ces soudures sont donc réalisées à l'extérieur, et sur, le boîtier 14.

Selon un exemple particulier, l'antenne RF 12 présente une taille inférieure ou égale à ¼ de la taille d'une antenne RF conforme à la classe 1 selon la norme ISO 14443. Pour rappel, la norme ISO 14443 spécifie qu'une antenne RF doit s'étendre (ou être contenue) dans une zone définie par deux rectangles, à savoir un rectangle extérieur dans lequel doit se trouver l'antenne RF et un rectangle intérieur (inclus dans le rectangle extérieur) dans lequel l'antenne RF ne doit pas se trouver. Selon la norme ISO 14443, une antenne de classe 1 par exemple doit s'étendre dans un rectangle extérieur présentant les dimensions 81 mm x 49 mm, à l'exclusion (c.-à-d. hors) d'un rectangle intérieur présentant les dimensions 64 mm x 34 mm. Selon l'exemple de réalisation considéré ici, l'antenne RF 12 doit être disposée dans un rectangle extérieur présentant une longueur et une largeur inférieure ou égale respectivement à la moitié de la longueur et à la moitié de largeur du rectangle extérieur tel que défini par la norme ISO 14443 pour une antenne de classe 1.

Selon un exemple particulier, l'antenne RF 12 présente un format conforme à la classe 5 ou à la classe 6 selon la norme ISO 14443.

De manière générale, on notera que divers configurations de l'antenne RF 12 sont possibles. En particulier, il est possible de faire varier le nombre de spires, le diamètre du fil de l'antenne RF 12 et/ou l'espacement inter-spire afin notamment d'adapter la fréquence de travail (c'est-à-dire la fréquence de résonnance) de l'antenne RF 12 selon le cas d'espèce, ici dans les limites imposées par le format de la carte RFID 2. Selon un exemple particulier, l'antenne RF 12 comprend au moins une spire.

Comme représenté en **figure 4****,** une cavité 13 est aménagée dans cet exemple dans le substrat 5 afin d'accueillir le module électronique 4. Cette cavité 13 est ici adaptée à la forme du module électronique 4, bien que d'autres configurations du substrat 5 soit possibles.

Le module électronique 4 présente dans cet exemple un profil en forme de marche sur deux bords opposés, ces bords formant les zones de connexion externes Z2A et Z2B. La forme et l'arrangement de ces zones de connexion externes Z2A, Z2B, et plus généralement du module électronique 4, peuvent varier selon le cas. La fonction de ces zones de connexion externes Z2A, Z2B est décrite plus en détail ci-après.

Dans un exemple particulier, l'arrangement du module électronique 4 par rapport au substrat 5 est tel que le module électronique 4 est disposé dans un même plan que celui de l'antenne 12, c'est-à-dire dans le plan d'enroulement dans lequel s'étendent les spires de l'antenne 12. Ceci est possible car le module électronique 4 n'est pas posé en surépaisseur sur le substrat 5 mais dans le substrat 5 lui-même, et plus particulièrement ici dans la cavité 13 aménagée dans le substrat 5. Ce mode de réalisation permet de limiter l'épaisseur totale de la carte RFID 2 et permet en outre d'effectuer une éventuelle lamination d'au moins une autre couche de sorte à recouvrir le module électronique 4, ce qui ne serait pas possible si le substrat 5 était de type PCB (la technologie PCB n'étant pas compatible avec la technique de lamination). L'utilisation de la technique de lamination permet d'obtenir une bonne adhésion des couches de protection sur les faces du substrat, ce qui garantit une bonne étanchéité et une protection efficace contre notamment la poussière et l'humidité.

Comme illustré en **figures 4-5****,** le module électronique 4 comporte un microcontrôleur (ou transpondeur) RF 3, une capacité CP sous forme d'un composant discret (condensateur), et un boîtier 14 dans lequel sont encapsulés le microcontrôleur RF 3 et la capacité CP. Le microcontrôleur RF 3 se présente sous la forme d'une puce électronique (dite « puce RF »), la capacité CP étant externe à ladite puce.

Le boîtier 14 est ici formé à partir d'une résine d'encapsulation appropriée (par exemple une résine époxy bien connue de l'homme du métier).

Par ailleurs, la valeur de la capacité CP peut varier selon le cas et peut en particulier être choisie afin de fixer la fréquence de résonance de l'antenne RF 12 à une valeur souhaitée. Dans un exemple particulier, la capacité CP présente une valeur comprise entre 50 pF (pour « picofarad ») et 500 pF, tel que par exemple une valeur de 470 pF.

Selon un exemple particulier, la capacité CP est une capacité de type Silicium (Si). L'utilisation d'une capacité CP à base de silicium, ou plus généralement de semi-conducteur, permet d'obtenir un composant discret de petite taille (en surface et en épaisseur). La capacité CP présente ainsi une taille du même ordre que celle de la puce RF 3, voire même une taille inférieure à celle de la puce RF 3. Cela permet aussi d'obtenir le composant CP sous la forme d'un wafer que l'on peut traiter selon les mêmes procédés de fabrication et mêmes étapes d'assemblage que celles mises en œuvre pour le microcontrôleur RF 3. Le choix d'une capacité CP à base de semi-conducteur offre une grande variété de finitions au niveau des pads de connexion, ce qui permet ainsi une adaptation facile à la méthode d'assemblage souhaitée et aussi à la bande de fréquence de l'application. On peut par exemple opter pour une finition à base d'Aluminium pour des fils de câblage (wire-bonding) en Or, ou pour des finitions en Or pour des applications en hautes fréquences (par exemple au-delà de 1GHz).

La puce RF 3 et la capacité CP sont chacune connectée électriquement en parallèle aux deux extrémités 12A, 12B de l'antenne RF 12 de sorte que le module électronique 4 (et plus particulièrement le microcontrôleur RF 3) puisse communiquer en mode sans contact avec l'extérieur de la carte RFID 2 en utilisant ladite antenne RF 12. Le microcontrôleur RF 3 est configuré pour fonctionner en mode sans contact en utilisant l'énergie collectée par l'antenne RF 12 à partir de signaux RF provenant d'un lecteur sans contact (non représenté).

La connexion de la puce RF 3 et de la capacité CP est réalisée à partir de câbles de connexion 22 encapsulés dans le boîtier 4.

Plus précisément, selon l'exemple illustré en **figures 4-5****,** le module électronique 4 comprend une grille de connexion 16 (appelée aussi cadre conducteur, ou « lead frame » en anglais) sur laquelle sont positionnées la puce électronique 3 et la capacité CP (composants montés en surface). Cette grille de connexion 16 est par exemple réalisée à partir d'un métal ou d'un alliage métallique (en cuivre par exemple). Dans cet exemple, la puce 3 et la capacité CP sont chacune fixées sur la grille de connexion 16 à l'aide d'une colle 15 non conductrice.

La grille de connexion 16 comprend une première portion Z0, formant ici une zone centrale, sur laquelle sont positionnées la capacité CP et la puce RF 3 à l'intérieur du boîtier 14. La grille de connexion 16 comprend également deux portions ZA et ZB, dites deuxièmes portions, formant notamment deux zones de connexion internes, notées respectivement Z1A et Z1B, à l'intérieur du boîtier 14, ces zones de connexion internes étant isolées électriquement de la première portion Z0. Cette isolation est réalisée dans cet exemple en séparant la zone centrale Z0 des zones de connexion internes Z1A, Z1B situées de part et d'autre avec de la résine d'encapsulation du boîtier 4.

Pour assurer la connexion électrique avec l'extérieur du module électronique 4, un fil de câblage 22a (et 22b respectivement) connecte la borne CP1 (et CP2 respectivement) de la capacité CP à la zone de connexion interne Z1A (et Z1B respectivement) de la grille de connexion 16. Les fils de câblage 22a et 22b sont ici respectivement fixés en des points A2 et B2 des zones de connexion internes Z1A et Z1B (**figure 5**). De même, un fil de câblage 22c (et 22d respectivement) connecte la borne 31 (et 32 respectivement) de la puce RF 3 à la zone de connexion interne Z1A (et Z1B respectivement) de la grille de connexion 16. Les fils de câblage 22c et 22d sont ici respectivement fixés en des points A3 et B3 des zones de connexion internes Z1A et Z1B (**figure 5**).

Les points de connexion A2 et A3 étant tous deux situés sur la plage de connexion interne Z1A, les fils de câblage 22a et 22c sont reliés électriquement l'un à l'autre. De même, les points de connexion B2 et B3 étant tous deux situés sur la plage de connexion interne Z1B, les fils de câblage 22b et 22b sont reliés électriquement l'un à l'autre.

Par ailleurs, la zone de connexion interne Z1A et la zone de connexion externe Z2A sont connectées ensemble électriquement, et forment ensemble la portion ZA de grille de connexion. De même, la zone de connexion interne Z1B et la zone de connexion externe Z2B sont connectées ensemble électriquement, et forment ensemble la portion ZB de grille de connexion.

Comme illustré en **figure 5****,** l'extrémité 12A de l'antenne RF est positionnée sur (ou en regard de) la zone de connexion externe Z2A de sorte à ce que ladite extrémité d'antenne 12A soit connectée électriquement à la borne CP1 de la capacité CP (via la zone de connexion ZA et le fil de câblage 22a) et que cette même extrémité d'antenne 12A soit connectée électriquement à la borne 31 de la puce RF 3 (via la zone de connexion ZA et le fil de câblage 31). De même, l'extrémité 12B de l'antenne RF est positionnée sur (ou en regard de) la zone de connexion externe Z2B de sorte à ce que ladite extrémité d'antenne 12B soit connectée électriquement à la borne CP2 de la capacité CP (via la zone de connexion ZB et le fil de câblage 22b) et que cette même extrémité d'antenne 12B soit connectée électriquement à la borne 32 de la puce RF 3 (via la zone de connexion ZB et le fil de câblage 32). L'antenne RF 12 s'étend ainsi totalement à l'extérieur du boîtier 14 du module électronique 4.

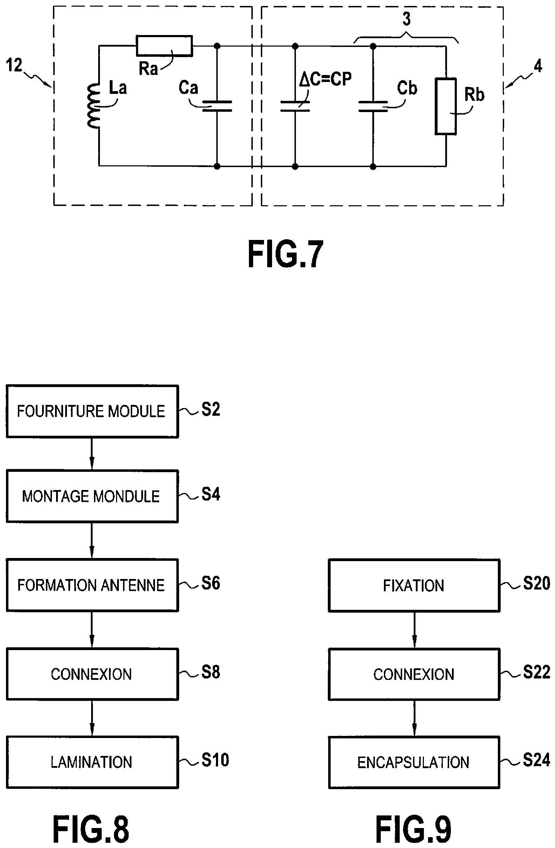

Cette configuration particulière du câblage 22 et de la grille de connexion 16 permet ainsi de connecter en parallèle le microcontrôleur RF 3 et la capacité CP aux extrémités 12A et 12B de l'antenne RF 12, tout en conservant ces extrémités 12A et 12B à l'extérieur du boîtier 14 afin de protéger les composants internes du module électronique 4 lors du montage de l'antenne RF. Cette configuration permet en particulier d'obtenir le schéma électrique équivalent tel qu'illustré en **figure 7****.** La capacité 14 constitue ici la capacité supplémentaire ΔC tel que décrite ci-avant en référence à la **figure 2****,** à la différence que la capacité CP (correspondant à ΔC) est ici positionnée avec le microcontrôleur RF 3 au sein d'un module électronique 4.

Dans l'exemple représenté en **figures 4** et **5****,** la capacité CP et la puce RF 3 ne sont connectées électriquement aux portions de grille ZA et ZB que par des fils de câblage encapsulés dans le boîtier 14, comme déjà décrit. Plus particulièrement, la puce 3 et la capacité CP sont positionnées sur la première portion centrale Z0 isolée électriquement des deuxièmes portions ZA et ZB qui s'étendent jusqu'à l'extérieur du boîtier 14 pour former les zones de connexion externes Z2A et Z2B. Cette configuration particulière permet de protéger encore d'avantage les composants internes du module électronique 4, notamment lors du montage par soudage des extrémités d'antenne 12A et 12B sur les zones de contact externes Z2A et Z2B.

On comprend que la carte RFID 2 telle que décrites ci-avant en référence aux **figures 4** et **5** ne constituent qu'un exemple non limitatif de réalisation, des variantes de réalisation étant possibles dans le cadre de l'invention. L'homme du métier comprend en particulier que certains éléments de la carte RFID 2 ne sont décrits ici que pour faciliter la compréhension de l'invention, ces éléments n'étant pas nécessaires pour mettre en œuvre l'invention.

En particulier, la configuration du module électronique 4, et notamment du câblage de connexion, de la grille de connexion 16, de l'arrangement de la capacité CP et de la puce RF 3, ou encore des formes et dimensions du module 4 peuvent être adaptés selon le cas. L'arrangement de l'antenne RF 12 peut également être adapté au cas d'espèce.

On comprend en outre que certains éléments généralement présents dans une carte RFID ont été volontairement omis car ils ne sont pas nécessaires à la compréhension de la présente invention.

La carte RFID 2 telles que représentée en **figures 4** et **5** peut présenter divers formes et tailles selon le cas d'espèce. Comme indiqué ci-avant, la surface de la carte RFID 2 (dans son plan principal) est inférieure ou égale à ¼ de la surface du format ID1 selon la norme ISO 7810. Selon un autre exemple, c'est l'antenne RF 12 de la carte RFID 2 qui présente une taille inférieure à la classe 1 selon la norme ISO 14443. L'antenne RF 12 présente par exemple un format conforme à la classe 5 ou à la classe 6 selon la norme ISO 14443.

La **figure 6** représente la configuration de la carte RFID 2 selon un exemple particulier. La carte RFID 2 présente ici un format ID-000 (ou 2FF) conforme à la norme ISO 7810. Comme illustré, l'antenne RF 12 présente dans cet exemple 3 spires et est connectée électriquement au niveau de ses extrémités 12A, 12B aux zones de connexion externes Z2A, Z2B respectivement.

Selon un exemple particulier, la carte RFID 2 telle que décrite ci-avant en référence aux **figures 4-6** peut comprendre en outre au moins une couche de protection supérieure et/ou au moins une couche de protection inférieure (non représentées) laminées de part et d'autre de la carte RFID 2. De manière avantageuse, le substrat 5 est en plastique, ou tout autre matériau approprié qui supporte un processus de lamination.

Par lamination, on entend dans ce document un processus mécanique consistant à fixer au moins une couche sur une face de la carte RFID en appliquant une pression mécanique selon une durée appropriée, avec apport ou non de chaleur, de sorte que les couches constitutives du corps de carte sont assemblées à des pression et température telles que les matières (par exemple plastiques) qui la constituent atteignent leur point de ramollissement de Vicat (ou « Vicat softening point » en anglais) et s'interpénètrent localement pour donner des ensembles laminés sensiblement cohérents.

A noter que dans les modes de réalisation et variantes décrits ci-avant, la carte RFID 2 est une carte purement sans contact, c'est-à-dire configurée pour communiquer uniquement en mode sans contact avec l'extérieur.

Comme écrit ci-avant, l'invention propose d'intégrer au moins une capacité, se présentant sous la forme d'un composant discret, dans un module électronique comportant en outre un microcontrôleur RF. Le module électronique est lui-même aménagé dans le corps de carte d'une carte RFID. Une antenne RF formée dans le corps de carte est connectée électriquement au module électronique de sorte que ladite au moins une capacité et le microcontrôleur RF soient connectées en parallèle aux extrémités de l'antenne RF.

L'invention permet avantageusement de réaliser une carte RFID de petite taille avec une antenne RF de type filaire. Autrement dit, bien qu'il soit nécessaire d'équiper une carte RFID d'au moins une capacité pour ajuster la fréquence de résonnance de l'antenne RF, il est possible d'utiliser la technique de fabrication filaire pour former l'antenne RF. Ceci est possible car la capacité supplémentaire qui est nécessaire pour ajuster la fréquence de résonnance de l'antenne RF est protégée dans le boitier du module électronique vis-à-vis de l'antenne RF (et plus particulièrement de ses extrémités) lorsque celle-ci est montée par soudage sur les zones de contact externes du module électronique. Ainsi, il est possible d'employer la technique de soudure par arc électrique pour connecter électriquement l'antenne RF filaire.

L'invention permet ainsi de réaliser l'antenne RF selon une technique de fabrication filaire, et ce pour des cartes RFID de petite taille, telles que des cartes de format inférieur à ID-1 selon la norme ISO 7810 par exemple, et plus particulièrement pour les formats de carte RFID tels que définis précédemment. En particulier, l'invention s'applique aux cartes RFID présentant une surface inférieure ou égale à ¼ de la surface du format ID1 selon la norme ISO 7810 (les cartes présentant le format ID-000 par exemple).

De cette manière, il n'est pas nécessaire d'utiliser un PCB pour former le substrat de la carte RFID, ce qui permet de limiter la complexité de construction de la carte RFID et les coûts de fabrication. La technique de fabrication filaire permet de réaliser la carte RFID à partir d'un substrat plastique ou équivalent.

Par ailleurs, en utilisant la technique de fabrication filaire pour réaliser l'antenne RF de la carte RFID, on peut avantageusement laminer des couches de protection supérieures et/ou inférieures sur la carte, ce qui n'est pas possible lorsqu'un PCB est utilisé en raison notamment de la fragilité de ce type de structure. Grâce à l'invention, on peut ainsi personnaliser de façon satisfaisante une carte RFID et ainsi améliorer significativement son aspect esthétique et sa fiabilité fonctionnelle par rapport par exemple à une carte RFID réalisée à partir d'un PCB.

Selon un exemple de réalisation particulier, la carte RFID de l'invention est une carte RFID configurée pour fonctionner exclusivement en mode sans contact. Autrement dit, cette carte RFID est dépourvue de tout contact externe visant à permettre une communication par contact avec un lecteur (ou terminal) externe.

Un procédé de fabrication de la carte RFID 2 telle que décrite ci-avant est à présent décrit en référence à la **figure 8****.**

Plus précisément, au cours d'une étape 52, on fournit un module électronique 4 tel que décrit précédemment en référence aux **figures 4-7****.** Un exemple de fabrication d'un tel module est décrit plus en détail ultérieurement.

Le module électronique 4 est ensuite monté (S4) (ou fixé) sur un substrat, en l'occurrence la couche inférieure 6 telle que représentée en **figure 4****.**

Une antenne RF 12 de type filaire comme décrite précédemment est ensuite formée (S6) dans ou sur le substrat. Pour ce faire, on utilise une technique de fabrication filaire bien connue consistant à former l'antenne RF 12 sous l'a forme d'un fil conducteur (généralement recouvert d'une gaine, ou résine, isolante) qui est intégré au substrat pour réaliser au moins une spire. La technique de formation filaire permet notamment d'ajuster le nombre de spires, le diamètre du fil de l'antenne, ou encore l'espacement entre chaque spire. Dans l'exemple considéré ici, l'antenne RF 12 est intégrée dans un deuxième substrat 9 comprenant les couches 8 et 10 (**figure 4**). Ce deuxième substrat 9, comportant l'antenne RF 12, est ensuite positionné sur le premier substrat 6 de sorte à placer respectivement les extrémités 12A et 12B de l'antenne RF 12 en regard des zones de connexion externes Z2A et Z2B. Dans cet exemple, le module électronique 4 se trouve ainsi positionné dans la cavité 13 que forme le deuxième substrat 9 avec le premier substrat 6.

A noter que dans l'exemple considéré ici, l'antenne filaire RF 12 est fabriquée directement dans la partie 9 du substrat 5. Alternativement, l'antenne RF 12 peut être fabriquée (ou bobinée) séparément puis assemblée (ou fixée) au substrat. L'antenne RF 12 peut être formée dans le substrat avant ou après le montage S4 du module électronique 4.

Une fois apposé (S6), le deuxième substrat 9 forme avec le premier substrat 6 un substrat global 5 (**figure 4**). Une résine 11 peut être utilisée pour combler un espace résiduel à l'interface entre le module électronique 4 et le substrat 5.

Dans cet exemple, le positionnement du deuxième substrat 9 sur le premier substrat 6 lors de l'étape S6 de formation de l'antenne RF est réalisé par lamination.

A noter que l'intégration de l'antenne RF 12 dans le deuxième substrat 9 peut être réalisée par exemple par application d'ultrasons de façon bien connue de l'homme du métier, et éventuellement aussi par application d'une pression mécanique sur l'ensemble. Selon un autre exemple, l'antenne RF est formée en bobinant celle-ci selon un gabarit mécanique puis en intégrant la bobine dans le substrat par application d'une matière adhésive.

Au cours d'une étape de connexion S8, les extrémités 12A et 12B de l'antenne RF 12 sont connectées électriquement au module électronique 4, et plus précisément aux zones de connexion externes Z2A et Z2B respectivement, de sorte que la capacité CP et le microcontrôleur RF 3 soient connectés en parallèle aux extrémités d'antenne 12A et 12B, comme expliqué précédemment.

Les extrémités d'antenne 12A et 12B sont ici soudées par arc électrique aux points de soudure souhaités dans les zones de connexion externes Z2A et Z2B.

Une fois l'étape de connexion S8 effectuée, il est possible de laminer (S10) au moins une couche de protection supérieure et/ou au moins une couche de protection inférieure sur les deux faces du substrat 5 de la carte RFID. Au moins une couche de protection supérieure est par exemple laminée sur la face supérieure de la carte RFID 2 telle que représentée en **figure 4** afin de recouvrir la face supérieure du module électronique 4. De cette manière, aucune face du module 4 n'est directement accessible depuis l'extérieur de la carte RFID 2. Des couches supplémentaires peuvent être laminées sur au moins l'une des faces de l'ensemble pour personnaliser l'aspect esthétique de la carte RFID. Ces couches peuvent en particulier comporter un quelconque motif.

A noter que divers variantes de réalisation sont toutefois possibles pour fabriquer la carte RFID 2. L'ordre des étapes décrites ci-dessus peut notamment être adapté selon le cas. Par exemple, le module électronique 4 peut être monté avant ou après la formation de l'antenne RF 12 dans le substrat.

Selon une variante de réalisation du procédé de fabrication décrit ci-dessus en référence à la **figure 8****,** on peut disposer la couche 8 (définissant déjà la partie inférieure de la cavité 13) sur la couche 6. On dépose ensuite le module électronique 4 dans la partie inférieure de la cavité 13 définie par les couches 6 et 8. On forme ultérieurement les spires de l'antenne RF 12 dans la couche 8 selon une quelconque technique appropriée comme déjà expliqué ci-avant (par exemple en formant directement l'antenne RF 12 dans la couche 8 ou en bobinant séparément l'antenne RF 12 puis en assemblant celle-ci à la couche 8). Une fois l'antenne RF 12 formée dans la couche 8, on réalise la connexion électrique S8 par soudure des extrémités d'antenne 12a et 12B sur les zones de connexion externes Z2A et Z2B respectivement, comme déjà expliqué. Pour ce faire, on utilise par exemple la technique de soudure par arc électrique. On dispose ensuite la couche 10 sur la couche 8 de sorte à placer le module électronique 4 dans la cavité 13 (**figure 4**). Les couches 6, 8 et 10 sont alors laminées ensemble afin de former le substrat 5 de la carte RFID 2.

Un exemple de réalisation du module électronique 4 tel que décrit précédemment est à présent décrit en référence à la **figure 9****.** Cette réalisation intervient par exemple lors de l'étape de fourniture S2 représentée en **figure 8****.**

Selon cet exemple de réalisation, on réalise une étape de fixation S20 au cours de laquelle la puce RF 3 et la capacité CP sont montés en surface sur la grille de connexion 16, et plus particulièrement sur la première portion Z0 (**figures 4** **et** **5**). La puce RF 3 et la capacité CP sont fixées sur la grille de connexion à l'aide par exemple d'une colle non conductrice 15. Dans un exemple particulier, la capacité CP et la puce RF 3 sont fixées (S20) au cours d'un même processus de collage. Selon une variante, la capacité CP est fixée avant ou après la puce RF 3.

Selon un exemple particulier, la même technique de collage est utilisée pour fixer la capacité CP et la puce RF 3 à la grille de connexion 16.

Au cours d'une étape de connexion S22, la puce RF 3 et la capacité CP sont chacune connectées électriquement aux deuxièmes portions de grille ZA et ZB, et plus particulièrement aux zones de connexion internes Z1A et Z1B comme décrit précédemment. Cette connexion se fait à l'aide de câbles de connexion 22 représentés en **figures 4-5****,** selon une technique bien connus de l'homme du métier (en Or ou Al par exemple).

La puce RF 3, la capacité CP et les fils de câblage 22 sont ensuite encapsulés (S24) dans une résine d'encapsulation formant le boîtier 14 du module électronique 4. La capacité CP se trouve ainsi protégée des éventuelles agressions extérieures, telles que notamment les fortes tensions et températures susceptibles d'être générées lors de la connexion (S8) de l'antenne RF 12 filaire au module électronique 4.

Selon un exemple particulier, des zones d'évidement (non représentées) peuvent en outre être formées le long du contour d'une première partie de la carte comportant le module électronique et l'antenne RF, de sorte que cette première partie de carte forme un élément détachable vis-à-vis du reste de la carte.

Comme indiqué ci-avant, la norme ISO 14443 spécifie qu'une antenne RF doit s'étendre (ou être contenue) dans une zone définie par deux rectangles, à savoir un rectangle extérieur dans lequel doit se trouver l'antenne RF et un rectangle intérieur (inclus dans le rectangle extérieur) dans lequel l'antenne RF ne doit pas se trouver. Plus particulièrement, selon la norme ISO 14443, une antenne de classe 1 doit notamment être contenue dans un rectangle extérieur présentant les dimensions 81 mm x 49 mm, ce qui représente une zone d'accueil d'une surface de 3969 mm², c.-à-d. approximativement 40 cm². L'invention, selon le mode de réalisation décrit ici, vise un dispositif RFID comprenant une antenne RF occupant une surface d'accueil inférieure ou égale à ¼ de la surface de 40 cm² du rectangle extérieur tel que prévu par la norme ISO 14443 pour une antenne de classe 1. Autrement dit, l'antenne RF de ce dispositif RFID occupe une surface d'accueil inférieure ou égale à 10 cm².

Dans ce mode de réalisation, l'aménagement de la puce RF et de ladite au moins une capacité dans un boîtier d'un module électronique permet avantageusement d'employer la technique filaire pour réaliser l'antenne RF, et ce même si la taille de l'antenne est relativement faible et nécessite la présence d'une capacité supplémentaire telle que déjà expliqué ci-avant.

Dans ce mode de réalisation, le corps moulé du dispositif RDIF peut par exemple former un bracelet, tel qu'un bracelet d'une montre par exemple. Un utilisateur peut par exemple porter un tel bracelet de sorte à pouvoir utiliser le dispositif RFID pour une application donnée.

Pour fabriquer un tel dispositif RFID, on peut par exemple connecter électriquement l'antenne RF (comportant au moins une spire) au module électronique 4 tel que décrit précédemment (**figures 4-5**) en soudant par arc électrique les deux extrémités d'antenne sur les zones de connexion externes Z2A, Z2B comme déjà expliqué précédemment. On moule ensuite un matériau d'enrobage afin d'enrober à la fois l'antenne RF et le module électronique 4. Le corps ainsi formé est par exemple un bracelet.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Dispositif RFID (2) présentant une surface inférieure ou égale à ¼ de la surface du format ID1 selon la norme ISO 7810, le dispositif RFID comprenant :
- un substrat (5) ;
- une antenne RF (12) de type filaire disposée dans le substrat ; et
- un module électronique (4), disposé dans le substrat, le module électronique comportant :
∘ une puce RF (3) ;
∘ au moins une capacité (CP) sous forme d'un composant discret extérieur à la puce RF ; et
∘ un boîtier (14) dans lequel sont encapsulées la puce RF et ladite au moins une capacité ;
la puce RF (3) et ladite au moins une capacité (CP) étant chacune connectée électriquement en parallèle à deux extrémités de l'antenne RF (12) de sorte que le module électronique puisse communiquer en mode sans contact avec l'extérieur du dispositif RFID en utilisant ladite antenne RF, lesdites extrémités (12A, 12B) de l'antenne RF étant positionnées hors dudit boîtier, le module électronique comprenant une grille de connexion (16) , la grille de connexion comportant :
- une première portion (Z0) sur laquelle sont montées la puce RF et ladite au moins une capacité ;
- deux deuxièmes portions (ZA, ZB), isolées électriquement de la première portion (Z0), formant une première et une deuxième zone de connexion (Z1A, Z1B), dites zones de connexion internes, situées dans le boîtier,
les deuxièmes portions (ZA, ZB) s'étendant de sorte à former respectivement une première et une deuxième zone de connexion (Z2A, Z2B), dites zones de connexion externes, situées à l'extérieur du boîtier (14) du module électronique, chaque zone de connexion externe (Z2A, Z2B) étant connectée respectivement à une extrémité (12A, 12B) respective de l'antenne RF (12) et à une zone de connexion interne (Z1A, Z1B) respective, la puce RF et ladite au moins une capacité étant connectées électriquement aux extrémités (12A, 12B) de l'antenne RF via des fils de câblage (22), encapsulés dans le boîtier, qui relient la puce RF et ladite au moins une capacité aux zones de connexion internes.

2. Dispositif RFID selon la revendication 1, dans lequel l'antenne RFID comprend au moins une spire qui s'étend dans un plan d'enroulement, le substrat (5) comprenant une cavité (13) accueillant le module électronique qui est disposé dans ledit plan d'enroulement.

3. Dispositif RFID selon la revendication 1 ou 2, dans lequel e substrat (5) est en plastique.

4. Dispositif RFID selon l'une quelconque des revendications 1 à 3, dans lequel adite au moins une capacité (CP) est de type Si.

5. Dispositif RFID selon l'une quelconque des revendications 1 à 4, dans lequel moins une couche de protection supérieure et au moins une couche de protection inférieure sont laminées de part et d'autre du substrat.

6. Dispositif RFID selon l'une quelconque des revendications 1 à 5, dans lequel l'antenne RF (12) présente un format conforme à la classe 5 ou à la classe 6 selon la norme ISO 14443.

7. Procédé de fabrication d'un dispositif RFID (2) comprenant les étapes suivantes :
- fourniture (S2) d'un module électronique comportant :
∘ une puce RF (3) ;
∘ au moins une capacité (CP) sous forme d'un composant discret extérieur à la puce RF ; et
∘ un boîtier (14) dans lequel sont encapsulées la puce RF et ladite au moins une capacité ;
- montage (S4) du module électronique sur un substrat (6) ;
- formation (S6) d'une antenne RF (12) de type filaire dans le substrat (5) ; et
- connexion électrique (S8) du module électronique (4) à deux extrémités (12A, 12B) de l'antenne RF positionnées hors dudit boîtier, la puce RF (3) et ladite au moins une capacité (CP) étant chacune connectée électriquement en parallèle aux deux extrémités de l'antenne RF, de sorte que le module RF puisse communiquer en mode sans contact avec l'extérieur du dispositif RFID en utilisant ladite antenne RF, le module électronique comprenant une grille de connexion (16) , la grille de connexion comportant :
- une première portion (Z0) sur laquelle sont montées la puce RF et ladite au moins une capacité ;
- deux deuxièmes portions (ZA, ZB), isolées électriquement de la première portion (Z0), formant une première et une deuxième zone de connexion (Z1A, Z1B), dites zones de connexion internes, situées dans le boîtier, les deuxièmes portions (ZA, ZB) s'étendant de sorte à former respectivement une première et une deuxième zone de connexion (Z2A, Z2B), dites zones de connexion externes, situées à l'extérieur du boîtier (14) du module électronique, lors de l'étape de connexion (S8), chaque extrémité (12A, 12B) de l'antenne RF étant soudée sur une dite zone de connexion externe (Z2A, Z2B) respective du module électronique, la puce RF et ladite au moins capacité étant connectées électriquement aux extrémités (12A, 12B) de l'antenne RF via des fils de câblage (22) encapsulés dans le boîtier, qui relient la puce RF et ladite au moins une capacité aux zones de connexion internes.

8. Procédé selon la revendication 7, dans lequel, lors de l'étape de formation (S6), l'antenne RF (12) est intégrée dans le substrat (5) par application d'ultrasons.

9. Procédé selon la revendication 7, dans lequel, lors de l'étape de formation (S6), l'antenne RF (12) est bobinée selon un gabarit mécanique puis intégrée dans le substrat (5) par application d'une matière adhésive.

10. Procédé selon l'une quelconque des revendications 7 à 9, dans lequel l'étape de fourniture du module électronique comprend les étapes suivantes :
- fixation (S20) de la puce RF et de ladite au moins une capacité sur la première portion de la grille de connexion (16) du module électronique ;
- connexion (S22) de la puce RF et de ladite au moins une capacité, via les fils de câblage (22), aux deux zones de connexion internes (Z1A, Z1B) de la deuxième portion de la grille de connexion ; et
- formation (S24) du boîtier (14) du module électronique à partir d'une résine d'encapsulation de sorte que ladite résine encapsule les fils de câblage, les zones de connexion internes de la grille de connexion étant situées dans le boîtier et isolées électriquement de la première portion de la grille de connexion.

11. Procédé selon l'une quelconque des revendications 7 à 9, dans lequel l'antenne RF (12) est comprise dans une couche (9) du substrat, l'étape de formation (S6) de l'antenne RF comprenant le positionnement de ladite couche (9) sur le substrat (6) sur lequel est monté le module électronique (4) de sorte que les extrémités (12A, 12B) de l'antenne RF soient chacune située en regard d'une zone de connexion externe (Z2A, Z2B) respective du module électronique.

12. Procédé selon l'une quelconque des revendications 7 à 11, dans lequel au moins une couche de protection supérieure et au moins une couche de protection inférieure sont laminées de part et d'autre du substrat.

## Patentansprüche

1. RFID-Vorrichtung (2), die eine Fläche aufweist, die kleiner als oder gleich ¼ der Fläche des Formats ID1 gemäß der Norm ISO 7810 ist, wobei die RFID-Vorrichtung umfasst:
- ein Substrat (5),
- eine RF-Antenne (12) vom drahtgebundenen Typ, die in dem Substrat angeordnet ist, und
- ein elektronisches Modul (4), das in dem Substrat angeordnet ist, wobei das elektronische Modul beinhaltet:
∘ einen RF-Chip (3),
∘ zumindest eine Kapazität (CP) in Form einer diskreten Komponente außerhalb des RF-Chips, und
∘ ein Gehäuse (14), in das der RF-Chip und die zumindest eine Kapazität eingekapselt sind,
wobei der RF-Chip (3) und die zumindest eine Kapazität (CP) jeweils elektrisch parallel mit zwei Enden der RF-Antenne (12) verbunden sind, sodass das elektronische Modul im Modus ohne Kontakt mit dem Äußeren der RFID-Vorrichtung kommunizieren kann, indem die RF-Antenne verwendet wird, wobei die Enden (12A, 12B) der RF-Antenne außerhalb des Gehäuses positioniert sind,
wobei das elektronische Modul ein Verbindungsgitter (16) umfasst, wobei das Verbindungsgitter beinhaltet:
- einen ersten Abschnitt (Z0), auf dem der RF-Chip und die zumindest eine Kapazität montiert sind,
- zwei zweite Abschnitte (ZA, ZB), die elektrisch von dem ersten Abschnitt (Z0) isoliert sind und eine erste und eine zweite Verbindungszone (Z1A, Z1B) bilden, die als interne Verbindungszonen bezeichnet werden, die sich in dem Gehäuse befinden,
wobei sich die zweiten Abschnitte (ZA, ZB) erstrecken, sodass sie jeweils eine erste und eine zweite Verbindungszone (Z2A, Z2B) bilden, die als externe Verbindungszonen bezeichnet werden, die sich außerhalb des Gehäuses (14) des elektronischen Moduls befinden, wobei jede externe Verbindungszone (Z2A, Z2B) jeweils mit einem jeweiligen Ende (12A, 12B) der RF-Antenne (12) und mit einer jeweiligen internen Verbindungszone (Z1A, Z1B) verbunden ist,
wobei der RF-Chip und die zumindest eine Kapazität über Verkabelungsdrähte (22), die in dem Gehäuse eingekapselt sind und die den RF-Chip und die zumindest eine Kapazität mit den internen Verbindungszonen verknüpfen, elektrisch mit den Enden (12A, 12B) der RF-Antenne verbunden sind.

2. RFID-Vorrichtung nach Anspruch 1, wobei die RFID-Antenne zumindest eine Windung umfasst, die sich in einer Wicklungsebene erstreckt, wobei das Substrat (5) einen Hohlraum (13) umfasst, der das elektronische Modul aufnimmt, das in der Wicklungsebene angeordnet ist.

3. RFID-Vorrichtung nach Anspruch 1 oder 2, wobei das Substrat (5) aus Kunststoff ist.

4. RFID-Vorrichtung nach einem der Ansprüche 1 bis 3, wobei die zumindest eine Kapazität (CP) vom Typ Si ist.

5. RFID-Vorrichtung nach einem der Ansprüche 1 bis 4, wobei zumindest eine obere Schutzschicht und zumindest eine untere Schutzschicht auf beiden Seiten des Substrats laminiert sind.

6. RFID-Vorrichtung nach einem der Ansprüche 1 bis 5, wobei die RF-Antenne (12) ein Format aufweist, das der Klasse 5 oder der Klasse 6 gemäß der Norm ISO 14443 entspricht.

7. Verfahren zur Herstellung einer RFID-Vorrichtung (2), umfassend die folgenden Schritte:
Bereitstellung (S2) eines elektronischen Moduls, welches beinhaltet:
∘ einen RF-Chip (3),
∘ zumindest eine Kapazität (CP) in Form einer diskreten Komponente außerhalb des RF-Chips, und
∘ ein Gehäuse (14), in das der RF-Chip und die zumindest eine Kapazität eingekapselt sind,
- Montage (S4) des elektronischen Moduls auf einem Substrat (6),
- Bildung (S6) einer RF-Antenne (12) vom drahtgebundenen Typ in dem Substrat (5), und
- elektrische Verbindung (S8) des elektronischen Moduls (4) mit zwei Enden (12A, 12B) der RF-Antenne, die außerhalb des Gehäuses positioniert sind, wobei der RF-Chip (3) und die zumindest eine Kapazität (CP) jeweils elektrisch parallel mit zwei Enden der RF-Antenne verbunden sind, sodass das RF-Modul im Modus ohne Kontakt mit dem Äußeren der RFID-Vorrichtung kommunizieren kann, indem die RF-Antenne verwendet wird,
wobei das elektronische Modul ein Verbindungsgitter (16) umfasst, wobei das Verbindungsgitter beinhaltet:
- einen ersten Abschnitt (Z0), auf dem der RF-Chip und die zumindest eine Kapazität montiert sind,
- zwei zweite Abschnitte (ZA, ZB), die elektrisch von dem ersten Abschnitt (Z0) isoliert sind und eine erste und eine zweite Verbindungszone (Z1A, Z1B) bilden, die als interne Verbindungszonen bezeichnet werden, die sich in dem Gehäuse befinden, wobei sich die zweiten Abschnitte (ZA, ZB) erstrecken, sodass sie jeweils eine erste und eine zweite Verbindungszone (Z2A, Z2B) bilden, die als externe Verbindungszonen bezeichnet werden, die sich außerhalb des Gehäuses (14) des elektronischen Moduls befinden,
wobei während des Schrittes der Verbindung (S8) jedes Ende (12A, 12B) der RF-Antenne auf eine jeweilige externe Verbindungszone (Z2A, Z2B) des elektronischen Moduls geschweißt wird, wobei der RF-Chip und die zumindest eine Kapazität über Verkabelungsdrähte (22), die in dem Gehäuse eingekapselt sind und die den RF-Chip und die zumindest eine Kapazität mit den internen Verbindungszonen verknüpfen, elektrisch mit den Enden (12A, 12B) der RF-Antenne verbunden werden.

8. Verfahren nach Anspruch 7, wobei während des Schrittes der Bildung (S6) die RF-Antenne (12) durch Anwendung von Ultraschall in das Substrat (5) integriert wird.

9. Verfahren nach Anspruch 7, wobei während des Schrittes der Bildung (S6) die RF-Antenne (12) gemäß einer mechanischen Schablone gewickelt und dann durch Auftragen eines Klebstoffes in das Substrat (5) integriert wird.

10. Verfahren nach einem der Ansprüche 7 bis 9, wobei der Schritt der Bereitstellung des elektronischen Moduls die folgenden Schritte umfasst:
- Befestigung (S20) des RF-Chips und der zumindest einen Kapazität auf dem ersten Abschnitt des Verbindungsgitters (16) des elektronischen Moduls,
- Verbindung (S22) des RF-Chips und der zumindest einen Kapazität über die Verkabelungsdrähte (22) mit den zwei internen Verbindungszonen (Z1A, Z1B) des zweiten Abschnittes des Verbindungsgitters, und
- Bildung (S24) des Gehäuses (14) des elektronischen Moduls aus einer Harzeinkapselung, sodass das Harz die Verkabelungsdrähte einkapselt, wobei sich die internen Verbindungszonen des Verbindungsgitters in dem Gehäuse befinden und elektrisch von dem ersten Abschnitt des Verbindungsgitters isoliert sind.

11. Verfahren nach einem der Ansprüche 7 bis 9, wobei die RF-Antenne (12) in einer Schicht (9) des Substrats enthalten ist, wobei der Schritt der Bildung (S6) der RF-Antenne die Positionierung der Schicht (9) auf dem Substrat (6) umfasst, auf dem das elektronische Modul (4) montiert ist, sodass sich die Enden (12A, 12B) der RF-Antenne jeweils gegenüber einer jeweiligen externen Verbindungszone (Z2A, Z2B) des elektronischen Moduls befinden.

12. Verfahren nach einem der Ansprüche 7 bis 11, wobei zumindest eine obere Schutzschicht und zumindest eine untere Schutzschicht auf beiden Seiten des Substrats laminiert werden.

## Claims

1. An RFID device (2) having a surface smaller than or equal to 1/4 of the surface of the ID1 format according to the ISO 7810 standard, the RFID device comprising:
- a substrate (5);
- a wire type RF antenna (12) disposed in the substrate; and
- an electronic module (4), disposed in the substrate, the electronic module including:
∘ an RF chip (3);
∘ at least one capacitance (CP) in the form of a discrete component external to the RF chip; and
∘ a casing (14) in which the RF chip and said at least one capacitance are encapsulated;
∘ the RF chip (3) and said at least one capacitance (CP) each being electrically connected in parallel to two ends of the RF antenna (12) so that the electronic module can communicate in contactless mode with the outside of the RFID device by using said RF antenna, said ends (12A, 12B) of the RF antenna being positioned out of said casing,
the electronic module comprising a lead frame (16), the lead frame including:
- a first portion (Z0) on which the RF chip and said at least one capacitance are mounted;
- two second portions (ZA, ZB), electrically isolated from the first portion (Z0), forming a first and a second connection area (Z1A, Z1B), called inner connection areas, located in the casing,
the second portions (ZA, ZB) extending so as to form respectively a first and a second connection area (Z2A, Z2B), called outer connection areas, located outside the casing (14) of the electronic module, each outer connection area (Z2A, Z2B) being connected respectively to a respective end (12A, 12B) of the RF antenna (12) and to a respective inner connection area (Z1A, Z1B),
the RF chip and said at least one capacitance being electrically connected to the ends (12A, 12B) of the RF antenna via wiring cables (22), encapsulated in the casing, which connect the RF chip and said at least one capacitance to the inner connection areas.

2. The RFID device according to claim 1, wherein the RFID antenna comprises at least a turn which extends in a winding plane, the substrate (5) comprising a cavity (13) accommodating the electronic module which is disposed in said winding plane.

3. The RFID device according to claim 1 or 2, wherein the substrate (5) is made of plastic.

4. The RFID Device according to any one of claims 1 to 3, wherein said at least one capacitance (CP) is of the Si type.

5. The RFID Device according to any one of claims 1 to 4, wherein at least one upper protective layer and at least one lower protective layer are laminated on either side of the substrate.

6. The RFID device according to any one of claims 1 to 5, wherein the RF antenna (12) has a format conforming to class 5 or class 6 according to ISO 14443 standard.

7. A method for manufacturing an RFID device (2) comprising the following steps:
- providing (S2) an electronic module including:
∘ an RF chip (3);
∘ at least one capacitance (CP) in the form of a discrete component external to the RF chip; and
∘ a casing (14) in which the RF chip and said at least one capacitance are encapsulated;
- mounting (S4) the electronic module on a substrate (6);
- forming (S6) an RF antenna (12) of the wire type in the substrate (5); and
- electrically connecting (S8) the electronic module (4) to both ends (12A, 12B) of the RF antenna positioned out of said casing, the RF chip (3) and said at least one capacitance (CP) each being electrically connected in parallel to both ends of the RF antenna, so that the RF module can communicate in contactless mode with the outside of the RFID device by using said RF antenna,
the electronic module comprising a lead frame (16), the lead frame including:
- a first portion (Z0) on which the RF chip and said at least one capacitance are mounted;
- two second portions (ZA, ZB), electrically isolated from the first portion (Z0), forming a first and a second connection area (Z1A, Z1B), called inner connection areas, located in the casing, the second portions (ZA, ZB) extending so as to form respectively a first and a second connection area (Z2A, Z2B), called outer connection areas, located outside the casing (14) of the electronic module,
during the connection step (S8), each end (12A, 12B) of the RF antenna being soldered to a respective area called outer connection area (Z2A, Z2B) of the electronic module, the RF chip and said at least capacitance being electrically connected to the ends (12A, 12B) of the RF antenna via wiring cables (22) encapsulated in the casing, which connect the RF chip and said at least one capacitance to the inner connection areas.

8. The method according to claim 7, wherein, during the formation step (S6), the RF antenna (12) is integrated into the substrate (5) by application of ultrasound.

9. The method according to claim 7, wherein, during the formation step (S6), the RF antenna (12) is wound according to a mechanical template and then integrated into the substrate (5) by application of an adhesive material.

10. The method according to any one of claims 7 to 9, wherein the step of providing the electronic module comprises the following steps:
- fixing (S20) the RF chip and said at least one capacitance on the first portion of the lead frame (16) of the electronic module;
- connecting (S22) the RF chip and said at least one capacitance, via the wiring cables (22), to both inner connection areas (Z1A, Z1B) of the second portion of the lead frame; and
- forming (S24) the casing (14) of the electronic module from an encapsulating resin so that said resin encapsulates the wiring cables, the inner connection areas of the lead frame being located in the casing and electrically isolated from the first portion of the lead frame.

11. The method according to any one of claims 7 to 9, wherein the RF antenna (12) is comprised in a layer (9) of the substrate, the step of forming (S6) the RF antenna comprising the positioning of said layer (9) on the substrate (6) on which the electronic module (4) is mounted so that the ends (12A, 12B) of the RF antenna are each located facing a respective outer connection area (Z2A, Z2B) of the electronic module.

12. The method according to any one of claims 7 to 11, wherein at least one upper protective layer and at least one lower protective layer are laminated on either side of the substrate.
